# EUROPEAN PATENT APPLICATION

(11) **EP 4 772 486 A1**
(43) Date of publication of application: **08.07.2026**
(21) Application number: 24859930.0
(22) Date of filing: 29.08.2024
(51) Int. Cl.: C03C 27/12, B60J 1/00, B60J 3/04, G02F 1/13, G02F 1/1334

(54) **LIGHT CONTROL LAMINATED GLASS**

(30) Priority: 01.09.2023 JP 2023142196
(71) Applicant: Nippon Sheet Glass Company, Limited, Tokyo 108-6321 (JP)
(72) Inventor: FUJIWARA, Takeshi, Tokyo 108-6321 (JP); ASAOKA, Hisashi, Tokyo 108-6321 (JP)
(74) Representative: Stanley, Andrew Thomas
(86) International application number: PCT/JP2024/031049
(87) International publication number: WO 2025/047905

(57) **Abstract**

A light-adjusting laminated glass (10) includes: a light-adjusting layer (14) whose light transmittance is adjustable by application of a voltage; a pair of conductive layers (15), (15) arranged to sandwich the light-adjusting layer (14) and configured to apply a voltage to the light-adjusting layer (14) due to being supplied with power; an intermediate layer (13) having an insulating property and arranged to sandwich the conductive layers (15); and a pair of glass plates (11), (12) arranged to sandwich the intermediate layer (13) and each having a first region (A) and a second region (B) with different curvatures. The second region (B) includes a curved region (40) having a smaller radius of curvature than the first region (A). The pair of curved regions (40), (40) have a short-circuit prevention portion (50) formed therebetween, the short-circuit prevention portion (50) being configured to prevent short-circuiting due to contact between the pair of conductive layers (15), (15).

## Description

### Technical field

The present invention relates to a light-adjusting laminated glass.

### Background Art

Light-adjusting laminated glass, in which a light-adjusting portion whose transmittance can be changed with use of electricity is enclosed in an interlayer film, is known for use in window glass for automobiles and trains. The light-adjusting portion is constituted by a light-adjusting layer and a pair of conductive layers sandwiching the light-adjusting layer. To improve the privacy of passengers, such light-adjusting laminated glass scatters light and appears like frosted glass when the light-adjusting layer is in an off state, and becomes transparent when the light-adjusting portion is in an on state. For example, a liquid crystal element is used as the light-adjusting layer (for example, see Patent Document 1).

### Prior Art Documents

### Patent Documents

Patent Document 1: International Publication No. 2022/153998

### Disclosure of the Invention

### Problem to be Solved by the Invention

Light-adjusting laminated glass used in window glass of vehicles and the like uses a light-adjusting portion with a small thickness. In addition, the light-adjusting laminated glass may have a curved region in part to fit the shape of a vehicle or the like. For this reason, when the light-adjusting portion (light-adjusting layer and pair of conductive layers) is arranged between a pair of curved regions, a wrinkle may occur in the light-adjusting portion, and this wrinkle may cause the pair of conductive layers to come into contact with each other, resulting in short-circuiting. If the pair of conductive layers in the light-adjusting portion are short-circuited, suitable current cannot be passed from the pair of conductive layers to the light-adjusting layer, making light adjustment impossible not only in the short-circuited area of the pair of conductive layers but also in the entire light-adjusting layer.

In view of this, there is demand for a light-adjusting laminated glass that can prevent short-circuiting caused by contact between the pair of conductive layers included in the light-adjusting portion.

### Means for Solving Problem

A characteristic configuration of the light-adjusting laminated glass according to the present invention includes: a light-adjusting layer whose light transmittance is adjustable by application of a voltage; a pair of conductive layers arranged to sandwich the light-adjusting layer and configured to apply the voltage to the light-adjusting layer due to being supplied with power; an intermediate layer having an insulating property and arranged to sandwich the conductive layers; and a pair of glass plates arranged to sandwich the intermediate layer, each having a first region and a second region with different curvatures, in which the second region includes a curved region having a smaller radius of curvature than the first region, and the pair of curved regions have a short-circuit prevention portion formed therebetween, the short-circuit prevention portion being configured to prevent short-circuiting caused by contact between the pair of conductive layers.

In the light-adjusting laminated glass, if the pair of glass plates are formed to have the pair of curved regions and the light-adjusting layer and the pair of conductive layers are arranged between the pair of curved regions, the pair of conductive layers may come into contact with each other and cause short-circuiting. In view of this, the light-adjusting laminated glass of this configuration includes the pair of glass plates each having the first region and the second region with different curvatures, the second region includes the curved region with a smaller radius of curvature than the first region, and the pair of curved regions have the short-circuit prevention portion formed therebetween, the short-circuit prevention portion preventing short-circuiting caused by contact between the pair of conductive layers arranged with the light-adjusting layer interposed therebetween. Accordingly, the light-adjusting laminated glass can prevent short-circuiting of the pair of conductive layers arranged between the pair of curved regions due to the presence of the short-circuit prevention portion. This allows the light-adjusting laminated glass to continue light adjustment stably even if it has a shape including a curved region. As a result, the light-adjusting laminated glass can favorably maintain its light-adjusting function.

Another characteristic configuration is that the short-circuit prevention portion does not include the light-adjusting layer and the pair of conductive layers and is constituted by only the intermediate layer and the pair of glass plates.

As in this configuration, when the short-circuit prevention portion does not include the light-adjusting layer or the pair of conductive layers and is constituted by only the intermediate layer and the pair of glass plates, short-circuiting caused by the pair of conductive layers does not occur in the short-circuit prevention portion. This allows the light-adjusting laminated glass to continue light adjustment stably in areas other than the short-circuit prevention portion. As a result, the light-adjusting laminated glass can suitably ensure the light-adjusting function.

Another characteristic configuration is that the short-circuit prevention portion does not include the pair of conductive layers and is constituted by only the light-adjusting layer, the intermediate layer, and the pair of glass plates.

As in this configuration, when the short-circuit prevention portion does not include the pair of conductive layers and is constituted by only the light-adjusting layer, the intermediate layer, and the pair of glass plates, short-circuiting caused by the pair of conductive layers does not occur in the short-circuit prevention portion. This allows the light-adjusting laminated glass to continuously perform light adjustment in areas other than the short-circuit prevention portion. As a result, the light-adjusting laminated glass can suitably ensure the light-adjusting function.

Another characteristic configuration is that the short-circuit prevention portion separates the light-adjusting layer and the pair of conductive layers arranged between the pair of first regions from the light-adjusting layer and the pair of conductive layers arranged between the pair of second regions, such that a boundary between the first region and the second region is electrically non-conductive in a plan view.

According to this configuration, the short-circuit prevention portion separates, in a plan view, the light-adjusting layer and the pair of conductive layers arranged between the pair of first regions from the light-adjusting layer and the pair of conductive layers arranged between the pair of second regions. Accordingly, the light-adjusting layer and the pair of conductive layers arranged between the pair of first regions and the light-adjusting layer and the pair of conductive layers arranged between the pair of second regions each independently exhibit the light-adjusting function. As a result, even if the pair of conductive layers in the pair of second regions including the curved regions are short-circuited and light adjustment by the light-adjusting layer becomes impossible, the light-adjusting laminated glass can individually continue light adjustment by the light-adjusting layer disposed between the pair of first regions. As a result, the light-adjusting laminated glass can suitably ensure the light-adjusting function.

Another characteristic configuration is that in the short-circuit prevention portion, the light-adjusting layer disposed between the pair of second regions has a film thickness that is larger than a film thickness of the light-adjusting layer disposed between the pair of first regions.

According to this configuration, in the pair of second regions, the presence of the light-adjusting layer having a film thickness that is larger than a film thickness of the light-adjusting layer between the pair of first regions ensures a large distance between the pair of conductive layers. For this reason, the pair of conductive layers are maintained in a spaced-apart state even if a wrinkle occurs in the light-adjusting layer and the pair of conductive layers in the second regions including the curved regions, and it is thereby possible to prevent the pair of conductive layers from short-circuiting due to contact. This allows the light-adjusting laminated glass to stably continue light adjustment by the light-adjusting layer even in the curved region having the short-circuit prevention portion. As a result, the light-adjusting laminated glass can suitably ensure the light-adjusting function.

Another characteristic configuration is that the short-circuit prevention portion has an insulating member interposed between the light-adjusting layer and the pair of conductive layers arranged between the pair of first regions, and the light-adjusting layer and the pair of conductive layers arranged between the pair of second regions, such that a boundary between the first region and the second region is electrically non-conductive in a plan view.

According to this configuration, the insulating member is interposed between the light-adjusting layer and the pair of conductive layers arranged between the pair of first regions, and the light-adjusting layer and the pair of conductive layers arranged between the pair of second regions. Accordingly, the light-adjusting layer and the pair of conductive layers arranged between the pair of first regions, and the light-adjusting layer and the pair of conductive layers arranged between the pair of second regions each independently exhibit the light-adjusting function. As a result, even if the light adjustment of the light-adjusting layer arranged between the pair of second regions becomes impossible due to the effect of short-circuiting between the pair of conductive layers or the like, light adjustment by the light-adjusting layer arranged between the pair of first regions can continue individually. As a result, the light-adjusting laminated glass can suitably ensure the light-adjusting function.

Another characteristic configuration is that the voltage of 30 V or more is applied to the light-adjusting layer when the light-adjusting layer is set to a haze value of 10% or less.

As in this configuration, if the voltage of 30 V or more is applied to the light-adjusting layer when the light-adjusting layer is set to a haze value of 10% or less, the transparency of the light-adjusting layer can be favorably increased, and short-circuiting caused by high voltage is prevented by the short-circuit prevention portion, allowing the light-adjusting function to be suitably exhibited.

Another characteristic configuration is that the light-adjusting layer has a film thickness of 5 µm or more and 150 µm or less.

According to this configuration, the thickness of the light-adjusting layer is 5 µm or more and 150 µm or less, and therefore the light-adjusting laminated glass can ensure a suitable light-adjusting function in the light-adjusting layer while reducing the weight of the light-adjusting layer. In addition, even with such a thin light-adjusting layer, the short-circuit prevention portion prevents the pair of conductive layers from coming into contact with each other, thereby preventing short-circuiting.

Another characteristic configuration is that in the second region, the glass plate has a three-dimensional curvature.

As in this configuration, when the glass plate in the second region has a three-dimensional curvature, the shape of the light-adjusting laminated glass can be changed appropriately to suit the installation location. In addition, even if the glass plate has a complex shape with a three-dimensional curvature, the short-circuit prevention portion prevents contact between the pair of conductive layers, thereby preventing short-circuiting.

Another characteristic configuration is that the intermediate layer includes a support layer that supports the conductive layer and an adhesive layer that has a smaller Young's modulus than the support layer.

The intermediate layer used in laminated glass is often made of a material with a high Young's modulus in order to ensure the strength of the laminated glass. However, if an intermediate layer with a high Young's modulus is placed on both sides of the pair of conductive layers, when the light-adjusting laminated glass vibrates, the vibrations transmitted from the intermediate layer to the pair of conductive layers may have an adverse effect on the light-adjusting layer. In view of this, in this configuration, the intermediate layer includes the support layer that supports the conductive layer and the adhesive layer that has a smaller Young's modulus than the support layer. With this configuration, the light-adjusting layer and the pair of conductive layers are supported by the support layer, and when the light-adjusting laminated glass vibrates, the vibration transmitted from the adhesive layer to the support layer can be reduced. This allows the light-adjusting laminated glass to suitably protect the light-adjusting layer and the pair of conductive layers with the support layer and the adhesive layer. As a result, the light-adjusting laminated glass can suitably prevent the intermediate layer from deteriorating the function of the light-adjusting layer.

Another characteristic configuration is that the light-adjusting laminated glass is disposed on a roof of a vehicle.

As in this configuration, by disposing the light-adjusting laminated glass on the roof of the vehicle, it is possible to achieve both a sense of openness inside the vehicle and privacy by the light adjustment of the light-adjusting laminated glass disposed on the roof.

Another characteristic configuration is that at least the short-circuit prevention portion is provided with a shielding film.

If the short-circuit prevention portion does not include the light-adjusting layer or the conductive layer, the short-circuit prevention portion cannot perform light adjustment. For this reason, the presence of the short-circuit prevention portion may impair the external appearance of the light-adjusting laminated glass. In view of this, in this configuration, the shielding film is provided in the short-circuit prevention portion. This allows the short-circuit prevention portion to be reliably shielded from the outside by the shielding film. As a result, the external appearance of the light-adjusting laminated glass can be favorably maintained.

Another characteristic configuration is that the first region is a substantially flat surface having a radius of curvature of 3000 mm or more, and the second region is a curved surface having a radius of curvature of 2000 mm or less.

According to this configuration, the first region is flat and the second region is curved, thereby improving the design of the vehicle. In addition, even in the case of a glass plate having a curved surface in which the radius of curvature of the second region is 2000 mm or less, the short-circuit prevention portion prevents the pair of conductive layers from coming into contact with each other, thereby preventing short-circuiting. Note that the above numerical values are examples of the upper and lower limits of the radius of curvature of the glass plate, and the radius of curvature of the first region is, for example, 3000 mm or more, preferably 4000 mm or more, and more preferably 5000 mm or more. The radius of curvature of the second region is, for example, 2000 mm or less, preferably 1000 mm or less, and more preferably 500 mm or less.

### Brief Description of the Drawings

FIG. 1 is a diagram showing a light-adjusting laminated glass disposed on a roof of a vehicle.
FIG. 2 is a partial cross-sectional view of a light-adjusting laminated glass of a first embodiment.
FIG. 3 is a partial cross-sectional view of a light-adjusting laminated glass according to a second embodiment.
FIG. 4 is a plan view of a light-adjusting laminated glass according to a third embodiment.
FIG. 5 is a partial cross-sectional view of the light-adjusting laminated glass according to the third embodiment.
FIG. 6 is a partial cross-sectional view of a light-adjusting laminated glass according to a fourth embodiment.
FIG. 7 is a plan view of a light-adjusting laminated glass according to a fifth embodiment.
FIG. 8 is a partial cross-sectional view of the light-adjusting laminated glass according to the fifth embodiment.
FIG. 9 is a comparative example of the light-adjusting laminated glass.
FIG. 10 is a diagram showing an example of a curved shape of the light-adjusting laminated glass.
FIG. 11 is a diagram showing an example of the curved shape of the light-adjusting laminated glass.

### Best Mode for Carrying out the Invention

Hereinafter, embodiments of the light-adjusting laminated glass according to the present invention will be described with reference to the drawings. In the present embodiment, glass applied to a vehicle will be described as an example of the light-adjusting laminated glass. However, the present invention is not limited to the following embodiments, and various modifications are possible without departing from the gist of the present invention.

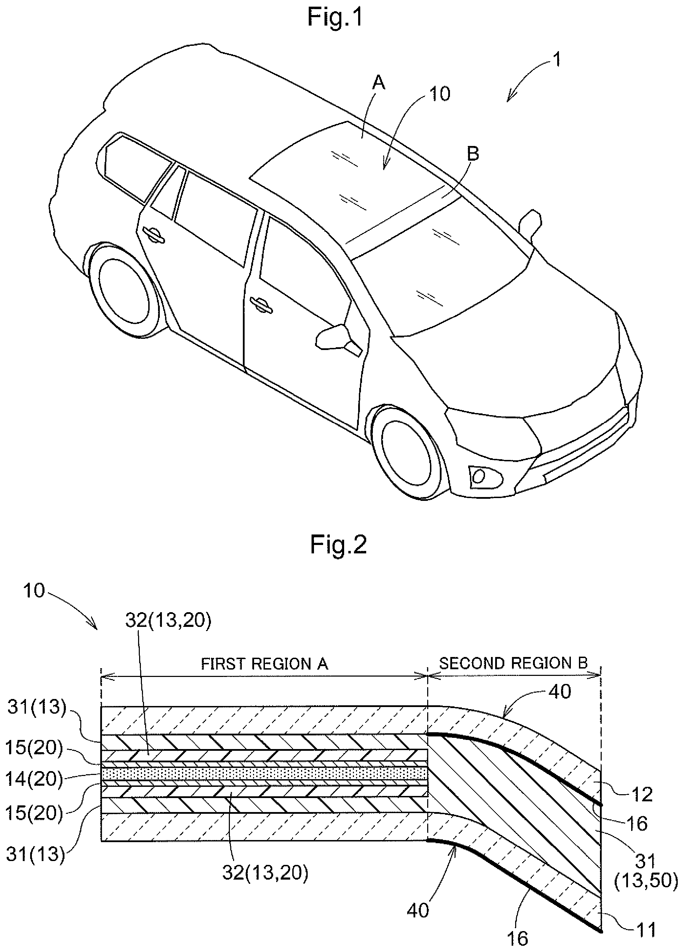

As shown in FIG. 1, a light-adjusting laminated glass 10 (hereinafter referred to as "laminated glass 10") is used, for example, as a roof glass for a vehicle. The laminated glass 10 may be used for a glass other than the roof glass of the vehicle 1, such as a rear glass, a rear side glass, a rear quarter glass, a door glass, an extra glass, a windshield, or the like. Note that the extra glass is a glass that is attached to a rear side of the vehicle 1 in order to improve rearward visibility for a driver of the vehicle 1.

### [First Embodiment]

As shown in FIG. 2, the laminated glass 10 includes a pair of glass plates 11, 12, an intermediate layer 13, a light-adjusting layer 14, and a pair of conductive layers 15, 15. The intermediate layer 13 is constituted by, for example, a first intermediate layer 31 (an example of an adhesive layer) that bonds to the pair of glass plates 11, 12, and a second intermediate layer 32 (an example of a support layer) that is disposed between the first intermediate layer 31 and the light-adjusting layer 14. A light-adjusting portion 20 includes the light-adjusting layer 14, the pair of conductive layers 15, 15, and the second intermediate layer 32. The light-adjusting portion 20 includes an element that can switch the light transmittance of the laminated glass 10.

The first intermediate layers (adhesive layers) 31, 31 are made of, for example, a thermoplastic resin. Examples of thermoplastic resins include plasticized polyvinyl acetal resin, plasticized polyvinyl chloride resin, saturated polyester resin, plasticized saturated polyester resin, polyurethane resin, plasticized polyurethane resin, ethylene-vinyl acetate copolymer resin, ethylene-ethyl acrylate copolymer resin, cycloolefin polymer resin, and ionomer resin. Of these thermoplastic resins, plasticized polyvinyl acetal resin is preferably used for the first intermediate layers (adhesive layers) 31, 31. These thermoplastic resins may be used alone or in combination of two or more kinds. The material forming the first intermediate layers 31, 31 is not limited to thermoplastic resin. The first intermediate layers 31, 31 may contain functional particles such as an infrared absorbing agent, an ultraviolet absorbing agent, or a luminescent agent. The first intermediate layers 31, 31 may have a colored portion called a shade band.

The second intermediate layers (support layers) 32, 32 are transparent resin layers. The thickness of the second intermediate layers 32, 32 is, for example, 5 µm or more and 500 µm or less, preferably 10 µm or more and 200 µm or less, and more preferably 50 µm or more and 150 µm or less. The second intermediate layers 32, 32 are made of a material such as polyethylene terephthalate, polyethylene naphthalate, polyamide, or polyether.

The light-adjusting portion 20 is switchable between a low transmittance state and a high transmittance state, for example. The transmittance may be switchable in multiple steps or may be switchable in a stepless manner (continuously). The light-adjusting portion 20 may be disposed over substantially the entire laminated glass 10 or over only a portion thereof, as necessary. The planar shape of the light-adjusting portion 20 is, for example, a rectangle that is smaller than the planar shape of the laminated glass 10.

The light-adjusting portion 20 is surrounded by the first intermediate layer 31. In the light-adjusting portion 20, the second intermediate layer 32 is a support layer that supports the pair of conductive layers 15, 15. The first intermediate layer 31 is an adhesive layer having a smaller Young's modulus than the second intermediate layer 32 (support layer). The first intermediate layer 31 and the second intermediate layer 32 are both made of resin, and the pair of glass plates 11, 12 are adhered to the light-adjusting portion 20 via the first intermediate layer 31.

The light-adjusting layer 14 has, for example, a parallel light transmittance of less than 30% when no voltage is applied, and a parallel light transmittance of 30% or more when a voltage is applied. The light-adjusting layer 14 more preferably has a parallel light transmittance of 20% or less when no voltage is applied, and a parallel light transmittance of 40% or more when a voltage is applied.

The light-adjusting layer 14 may also have a haze of 10% or more when no voltage is applied, and a haze of less than 10% when a voltage is applied. The light-adjusting layer 14 more preferably has a haze of 20% or more when no voltage is applied, and a haze of 8% or less when a voltage is applied. The light-adjusting layer 14 may have a smaller surface area than the intermediate layer 13 (the first intermediate layer 31 and the second intermediate layer 32).

The light-adjusting layer 14 is constituted by a light-adjusting film or the like, and for example, controls the haze ratio of the film depending on whether or not a current is applied, thereby creating a transparent state and an opaque state. That is, the light transmittance of the light-adjusting layer 14 can be adjusted by applying a voltage. The light-adjusting layer 14 can be of any known type, such as a polymer dispersed liquid crystal (PDLC) type using liquid crystal, suspended particle device (SPD) type, an electrochromic type, or a thermochromic type. The light-adjusting film is constituted by the light-adjusting layer 14 made of, for example, liquid crystal or the like, and a pair of conductive layers 15, 15 arranged on both sides of the light-adjusting layer 14.

The pair of conductive layers 15, 15 are arranged to sandwich the light-adjusting layer 14, and apply a voltage to the light-adjusting layer 14 due to being supplied with power. The intermediate layer 13 (first intermediate layer 31 and second intermediate layer 32) is arranged to sandwich the pair of conductive layers 15, 15, and has an insulating property. The conductive layers 15, 15 can be made of, for example, a transparent conductive oxide (TCO). Examples of the TCO include tin-doped indium oxide (ITO), aluminum-doped zinc oxide (AZO), and indium-doped cadmium oxide. In addition, the conductive layers 15, 15 can be made of transparent conductive polymers such as poly(3,4-ethylenedioxythiophene) (PEDOT) and poly(4,4-dioctylcyclopentadithiophene), a laminated film of a metal layer and a dielectric layer, silver nanowires, or a silver or copper metal mesh, or the like. The conductive layers 15, 15 are not limited to these and may be made of other materials.

The light-adjusting layer 14 is opaque when no voltage is applied, and light adjustment is performed and the light-adjusting layer 14 becomes transparent when a voltage is applied via the pair of conductive layers 15, 15. Note that the light-adjusting layer 14 may be configured to be transparent when no voltage is applied and opaque when a voltage is applied.

The light-adjusting layer 14 is configured such that, for example, a voltage of 30 V or more is applied when the haze value is set to 10% or less. With this configuration, the light-adjusting layer 14 in the laminated glass 10 can favorably improve transparency and can properly exhibit the light-adjusting function.

The thickness of the light-adjusting layer 14 is, for example, 5 µm or more and 150 µm or less, preferably 5 µm or more and 100 µm or less, and more preferably 5 µm or more and 50 µm or less. When the thickness of the light-adjusting layer 14 is 20 µm or more and 150 µm or less, the laminated glass 10 can ensure that the light-adjusting layer 14 has an appropriate light-adjusting function while reducing the weight of the light-adjusting layer 14.

In this embodiment, out of the pair of glass plates 11, 12 of the laminated glass 10, the first glass plate 11 is disposed on a vehicle interior side and the second glass plate 12 is disposed on a vehicle exterior side. The pair of glass plates 11, 12 oppose each other, and the intermediate layer 13, the light-adjusting layer 14, and the pair of conductive layers 15, 15 are located between the pair of glass plates 11, 12. The pair of glass plates 11, 12 are fixed together with the intermediate layer 13, the light-adjusting layer 14, and the like sandwiched therebetween. During this fixing, the intermediate layer 13, the light-adjusting layer 14, and the like are sandwiched between the pair of glass plates 11, 12 to form a laminate body. The laminate body is fixed, for example, in a vacuum controlled to a range of -100 kPa to -65 kPa at a temperature in the range of 70°C to 110°C. These conditions are merely examples, and the heating conditions, temperature conditions, and methods such as the lamination method and vacuum thickness may be selected as appropriate.

The first glass plate 11 and the second glass plate 12 can be made of known glass plates, and can be made of general clear glass. An example of the composition of clear glass is shown below.

### (Clear glass)

SiO₂: 70 to 73 mass%
Al₂O₃: 0.6 to 2.4 mass%
CaO: 7 to 12 mass%
MgO: 1.0 to 4.5 mass%
R₂O: 13 to 15 mass% (R is an alkali metal)
Total iron oxide (T-Fe₂O₃), expressed as Fe₂O₃: 0.08 to 0.14 mass%

For the first glass plate 11 and the second glass plate 12, in addition to clear glass, green glass containing a predetermined amount or more of iron, privacy glass, and UV-cut green glass can be favorably used. An example of the composition of privacy glass is shown below.

### (Privacy glass)

SiO₂: 66 to 75 mass%
Al₂O₃: 0 to 5 mass%
CaO: 5 to 15 mass%
MgO: 0 to 6 mass%
R₂O: 10 to 20 mass% (R is an alkali metal)
Total iron oxide (T-Fe₂O₃), expressed as Fe₂O₃: 0.5 to 2.5 mass%
TiO₂: 0.2 to 5 mass%
Cobalt oxide (CoO), expressed as CoO: 50 to 500 ppm by mass
Se: 0 to 70 ppm by mass

The pair of glass plates 11, 12 are arranged to sandwich the intermediate layer 13, and each have a first region A and a second region B whose curvatures are different from each other. In the second region B, the glass plates 11, 12 have a three-dimensional curvature. That is, in the second region B, the glass plates 11, 12 are formed to curve not only in the vehicle front-rear direction but also in the vehicle left-right direction.

The second region B includes a curved region 40 having a smaller radius of curvature than the first region A. In the laminated glass 10, for example, the first region A is a substantially flat surface having a radius of curvature of 3000 mm or more, and the second region B is a curved surface having a radius of curvature of 2000 mm or less. Note that the above numerical values are examples of the upper and lower limits of the radius of curvature of the glass plate, and the radius of curvature of the first region A is, for example, 3000 mm or more, preferably 4000 mm or more, and more preferably 5000 mm or more. The radius of curvature of the second region B is, for example, 2000 mm or less, preferably 1000 mm or less, and more preferably 500 mm or less.

### [Comparative Example]

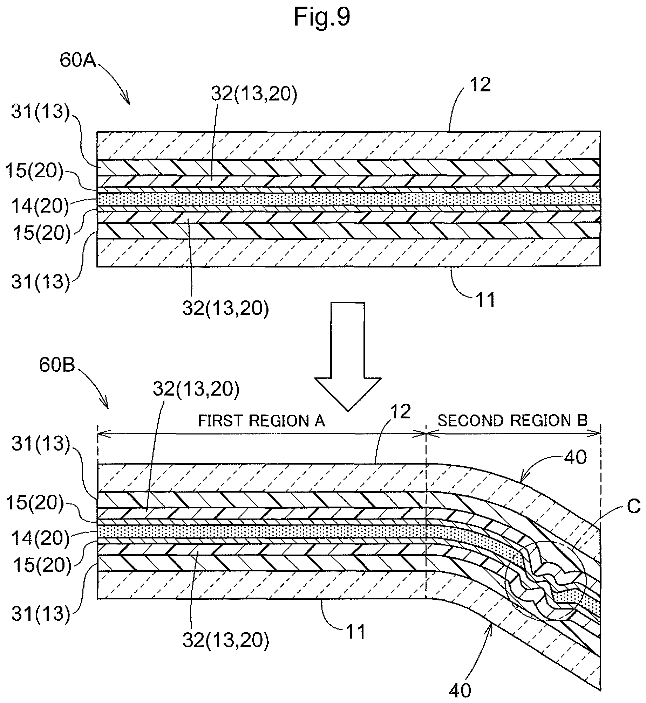

For example, when a portion of a flat laminated glass 60A shown in the upper part of FIG. 9 is bent to form a laminated glass 60B shown in the lower part of FIG. 9, wrinkles may occur in a circled portion C between the curved regions 40 included in the second regions B. In this case, the pair of conductive layers 15, 15 may come into contact with each other and short-circuit, and if the pair of conductive layers 15, 15 short-circuit, all light adjustment by the light-adjusting layer 14 becomes impossible.

The mechanism by which wrinkles occur in the laminated glass 60B will be described below. When two pieces of glass having particularly deep curves are formed as the pair of glass plates 11, 12, the radii of curvature of the two pieces of glass differ from each other. For example, this is the case when the radius of curvature of the first glass plate 11 is smaller than the radius of curvature of the second glass plate 12, or the like. Such a difference in the radius of curvature between the pair of glass plates 11, 12 causes misalignment in the pair of conductive layers 15, 15 sandwiched between the pair of glass plates 11, 12, and shear stress remains after compression bonding, which increases wrinkles in the light-adjusting portion 20. Furthermore, if the pair of glass plates 11, 12 have a three-dimensional curvature, the pair of conductive layers 15, 15 are more likely to be misaligned, which further increases the wrinkles in the light-adjusting portion 20.

In the process of fixing the intermediate layer 13, the light-adjusting layer 14, and the like sandwiched between the pair of glass plates 11, 12, wrinkles occur in the light-adjusting portion 20 when the functional film conforms to the curved shape of the glass plates. Wrinkles are particularly likely to occur on curved surfaces with small radii of curvature. In other words, the smaller the radius of curvature of the curved surface is, the more a mismatch occurs between the upper and lower surfaces of the second intermediate layer 32 (support layer) and the conductive layer 15 when they conform to the curved shape of the glass plates 11, 12.

In addition, in the pair of glass plates 11, 12, portions having a large radius of curvature have different curved peripheral lengths depending on the location. When the planar light-adjusting layer 14 is disposed in a portion of the pair of glass plates 11, 12 having a large radius of curvature and the intermediate layer 13 is laminated on the light-adjusting layer 14, an excess portion is generated in the intermediate layer 13 where the light-adjusting layer 14 is embedded at portions having different curved peripheral lengths. This excess portion occurs particularly at portions where the gap between the peripheral length of the pair of glass plates 11, 12 and the peripheral length of the intermediate layer 13 is large. The curved glass plates 11, 12 and the intermediate layer 13 with the light-adjusting layer 14 interposed therebetween are laminated to form a laminate body. As described above, this laminate body is bonded at high temperature in a vacuum to obtain laminated glass. At this high temperature, the intermediate layer 13 expands and contracts, the above-described excess portion (the gap in peripheral length) is gradually mitigated, and the intermediate layer 13, which was planar, conforms to the curved surface of the glass. However, in portions of the pair of glass plates 11, 12 having a small radius of curvature, or in a case where the pair of glass plates 11, 12 have a three-dimensional curvature as described below, this mitigation may be insufficient, causing wrinkles, which may cause the pair of conductive layers 15, 15 to come into contact with each other and short-circuit.

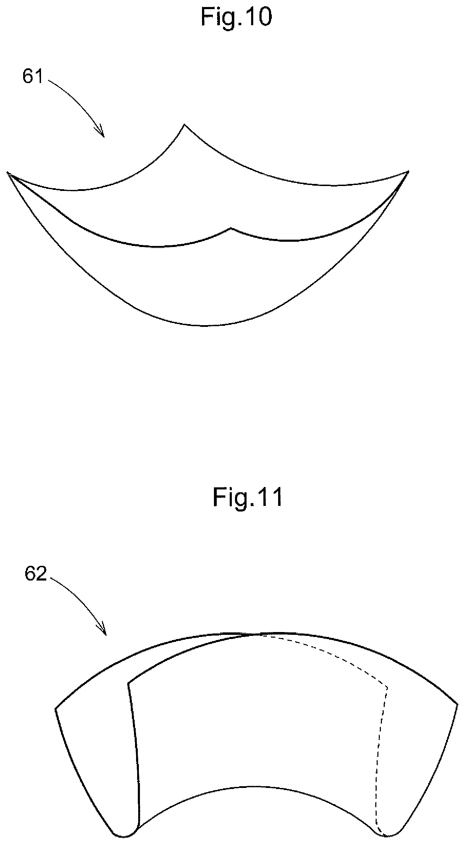

The following two embodiments are examples of three-dimensional laminated glass. A laminated glass 61 shown in FIG. 10 is a so-called dish-shaped laminated glass in which two radii of curvature in orthogonal directions are both formed as convex portions in the same direction (e.g., convex upward and convex upward). A laminated glass 62 shown in FIG. 11 is a so-called saddle-shaped laminated glass in which two radii of curvature in orthogonal directions are formed as convex portions in mutually different directions (convex upward and convex downward). In the case of the dish-shaped laminated glass 61, the peripheral length of the laminated glass 61 is shorter at the ends. That is, when the flat intermediate layer 13 is laminated between the pair of glass plates 11, 12, the intermediate layer 13 remains in excess at the ends of the laminated glass 61. Accordingly, wrinkles in the light-adjusting portion 20 are likely to occur at the ends of the laminated glass 61. On the other hand, in the case of the saddle-shaped laminated glass 62, the peripheral length of the laminated glass 62 is shorter at the center. That is, when the flat intermediate layer 13 is laminated between the pair of glass plates 11, 12, the intermediate layer 13 remains in excess at the center of the laminated glass 62. Accordingly, wrinkles in the light-adjusting portion 20 tend to occur in the center of the laminated glass 62. In the case of the embodiment shown in FIGS. 10 and 11, the wrinkles increase the likelihood that the pair of conductive layers 15, 15 will come into contact with each other and cause short-circuiting.

In view of this, in the laminated glass 10 of this embodiment, a short-circuit prevention portion 50 is formed between the pair of curved regions 40, 40, as shown in FIG. 2. The short-circuit prevention portion 50 is provided to prevent short-circuiting caused by contact between the pair of conductive layers 15, 15. Accordingly, the presence of the short-circuit prevention portion 50 in the laminated glass 10 can prevent short-circuiting between the pair of conductive layers 15, 15 arranged between the pair of curved regions 40, 40. As a result, the laminated glass 10 can stably continue light adjustment even when it has a shape including the curved region 40. As a result, the light-adjusting function of the laminated glass 10 can be favorably maintained.

In this embodiment, as shown in FIG. 2, the short-circuit prevention portion 50 does not include the light-adjusting layer 14 and the pair of conductive layers 15, 15, and is constituted by only the second intermediate layer 32 and the pair of glass plates 11, 12. Accordingly, in the short-circuit prevention portion 50, short-circuiting due to the pair of conductive layers 15, 15 does not occur. As a result, the laminated glass 10 can stably continue light adjustment in areas other than the short-circuit prevention portion 50. As a result, the light-adjusting function of the laminated glass 10 can be properly ensured.

The short-circuit prevention portion 50 is provided with the shielding film 16. The shielding film 16 is an opaque layer, and is provided, for example, in a strip shape along the peripheral edge of the laminated glass 10 including the short-circuit prevention portion 50. The shielding film 16 is, for example, an opaque (e.g., black) colored ceramic layer. The shielding film 16 may be a colored interlayer film or a colored film having light-shielding properties, or may be a combination of at least one of them with a colored ceramic layer. The colored film may also be in one piece with an infrared reflective film or the like.

Since the laminated glass 10 has the opaque shielding film 16, it is possible to suppress deterioration caused by ultraviolet rays of the resin such as urethane that holds the peripheral edge of the laminated glass 10 to the vehicle body. In addition, the shielding film 16 can conceal the pair of conductive layers 15, 15 electrically connected to the light-adjusting layer 14 and wiring connected to electrodes such that they are difficult to see from the vehicle exterior and/or vehicle interior. In addition, the short-circuit prevention portion 50 can be reliably shielded from the outside by the shielding film 16. As a result, the laminated glass 10 can favorably maintain its external appearance.

The shielding film 16 can be formed, for example, by applying a ceramic color paste containing a fusible glass frit containing a black pigment onto the glass plates (glass plates 11, 12) by screen printing or the like, and then firing the paste. However, there is no limitation to this. The shielding film 16 may also be formed, for example, by applying an organic ink containing a black or dark color pigment onto a glass plate by screen printing or the like, and then drying it.

In the example shown in FIG. 2, the shielding film 16 is provided on the vehicle interior side of the first glass plate 11 and the vehicle interior side of the second glass plate 12. The shielding film 16 may also be provided on only one of the vehicle interior side of the first glass plate 11 and the vehicle interior side of the second glass plate 12.

In this embodiment, as shown in FIG. 1, the laminated glass 10 is disposed on the roof of the vehicle 1. This allows the vehicle 1 to easily achieve both a sense of openness inside the vehicle and privacy by light adjustment of the laminated glass 10 disposed on the roof.

In the laminated glass 10, the first region A is preferably a substantially flat surface having a radius of curvature of 5000 mm or more, and the second region B is preferably a curved surface having a radius of curvature of 2000 mm or less. In this way, the laminated glass 10 has a flat shape in the first region Aa and a curved surface in the second region B, thereby improving the design of the vehicle.

In addition, in this embodiment, the intermediate layer 13 includes the second intermediate layer 32 serving as a support layer that supports the conductive layer 15, and the first intermediate layer 31 serving as an adhesive layer having a smaller Young's modulus than the support layer (second intermediate layer 32). Accordingly, the light-adjusting layer 14 and the pair of conductive layers 15 are supported by the support layer (second intermediate layer 32), and when the laminated glass 10 vibrates, the vibration transmitted from the adhesive layer (first intermediate layer 31) to the support layer (second intermediate layer 32) can be reduced. As a result, the laminated glass 10 can suitably protect the light-adjusting layer 14 and the pair of conductive layers 15 with the first intermediate layer 31 and the second intermediate layer 32. As a result, the laminated glass 10 can suitably prevent the intermediate layer 13 from deteriorating the function of the light-adjusting layer 14. In particular, by configuring the second intermediate layer 32 as the light-adjusting portion 20, the light-adjusting portion 20 is easy to handle, and by adhering the glass plates 11, 12 to the light-adjusting portion 20 via the first intermediate layer 31, it is possible to easily manufacture the laminated glass 10. In addition, the problem of the light-adjusting layer 14 being damaged can also be prevented even if the first intermediate layer 31 serving as an adhesive layer is deformed.

### [Second Embodiment]

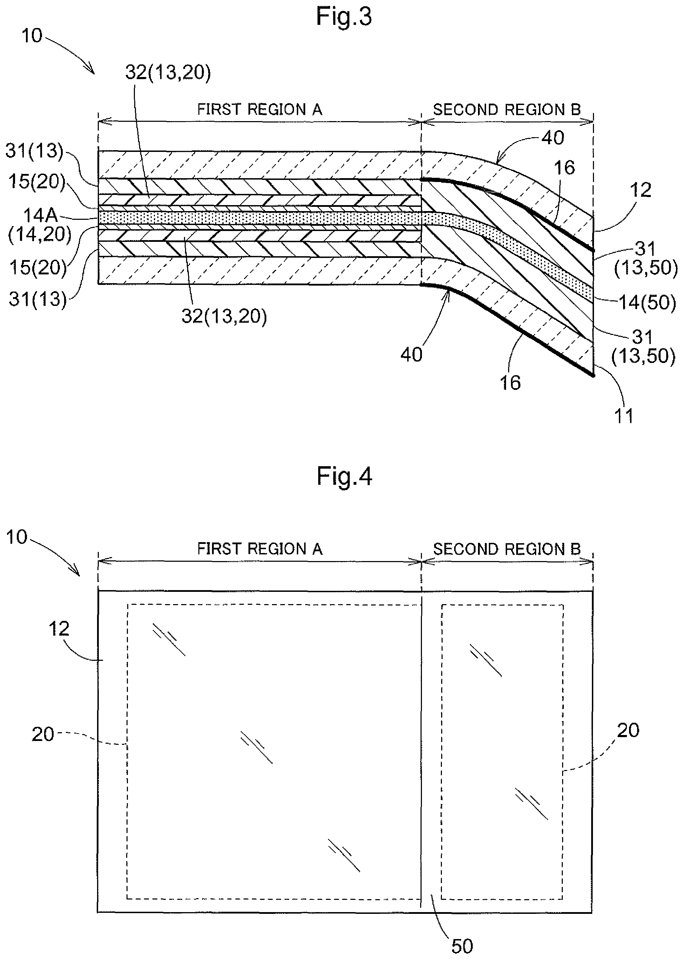

In a second embodiment, as shown in FIG. 3, the short-circuit prevention portion 50 in the second region B of the laminated glass 10 is constituted by a light-adjusting layer 14, an intermediate layer 13, and a pair of glass plates 11, 12. That is, in the present embodiment, the short-circuit prevention portion 50 does not have a pair of conductive layers 15, 15. The other configurations are the same as those in the first embodiment.

In the present embodiment, when the short-circuit prevention portion 50 does not have a pair of conductive layers 15, 15 and is constituted by only an intermediate layer 13 and a pair of glass plates 11, 12, short-circuiting due to the pair of conductive layers 15, 15 does not occur in the short-circuit prevention portion 50. Accordingly, the laminated glass 10 can stably continue light adjustment in areas other than the short-circuit prevention portion 50. As a result, the light-adjusting function of the laminated glass 10 can be suitably ensured.

### [Third Embodiment]

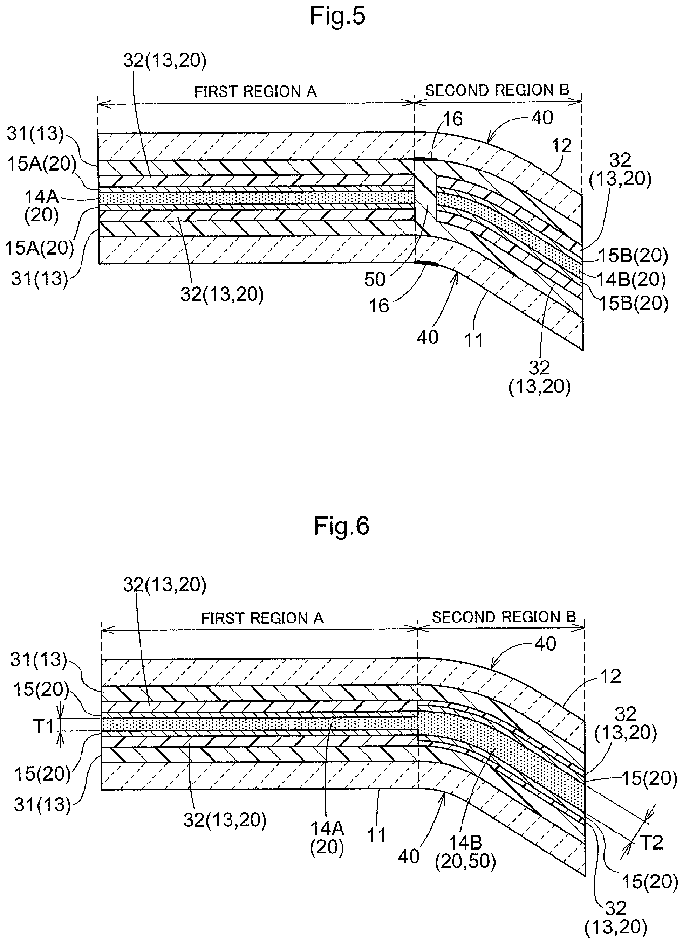

In a third embodiment, as shown in FIGS. 4 and 5, the short-circuit prevention portion 50 in the second region B of the laminated glass 10 separates the light-adjusting portion 20 disposed between the pair of first regions A from the light-adjusting portion 20 disposed between the pair of second regions B such that the boundary between the first region A and the second region B is electrically non-conductive in a plan view. The other configurations are the same as those in the first embodiment.

According to this embodiment, the short-circuit prevention portion 50 mitigates the curved state of the light-adjusting portion 20 disposed between the pair of second regions B, thereby preventing short-circuiting between a pair of conductive layers 15B, 15B in the pair of curved regions 40. In addition, since the light-adjusting portion 20 of the pair of first regions A and the light-adjusting portion 20 of the pair of second regions B are separated from each other, a light-adjusting layer 14A of the first region A and a light-adjusting layer 14B of the second region B can perform light adjustment independently. Accordingly, even if the pair of conductive layers 15B, 15B short-circuit in the second region B, making light adjustment by the light-adjusting layer 14B impossible, the laminated glass 10 can continue light adjustment by the light-adjusting layer 14A located between the pair of first regions A. As a result, the laminated glass 10 can suitably ensure the light-adjusting function in a specific region (first region A).

### [Fourth Embodiment]

In a fourth embodiment, as shown in FIG. 6, the short-circuit prevention portion 50 in the second region B of the laminated glass 10 is configured such that a film thickness T2 of the light-adjusting layer 14B disposed between the pair of second regions B is larger than a film thickness T1 of the light-adjusting layer 14A disposed between the pair of first regions A. The other configurations are the same as those in the first embodiment.

According to this embodiment, in the pair of second regions B, the presence of the light-adjusting layer 14B having a film thickness T2 greater than the film thickness T1 makes it possible to ensure a large distance between the pair of conductive layers 15, 15. For this reason, the pair of conductive layers 15, 15 are kept spaced apart from each other even if wrinkles occur in the light-adjusting portion 20 (light-adjusting layer 14B and the pair of conductive layers 15, 15), whereby it is possible to prevent the pair of conductive layers 15, 15 from short-circuiting due to contact. As a result, the laminated glass 10 can stably continue light adjustment by the light-adjusting layer 14B even in the curved region 40 having the short-circuit prevention portion 50. As a result, the laminated glass 10 can suitably ensure the light-adjusting function. Here, the film thickness T1 is, for example, 5 µm or more and 150 µm or less, preferably 5 µm or more and 100 µm or less, and more preferably 5 µm or more and 50 µm or less. On the other hand, the film thickness T2 is, for example, 50 µm or more and 500 µm or less, preferably 30 µm or more and 200 µm or less, and more preferably 40 µm or more and 150 µm or less.

### [Fifth Embodiment]

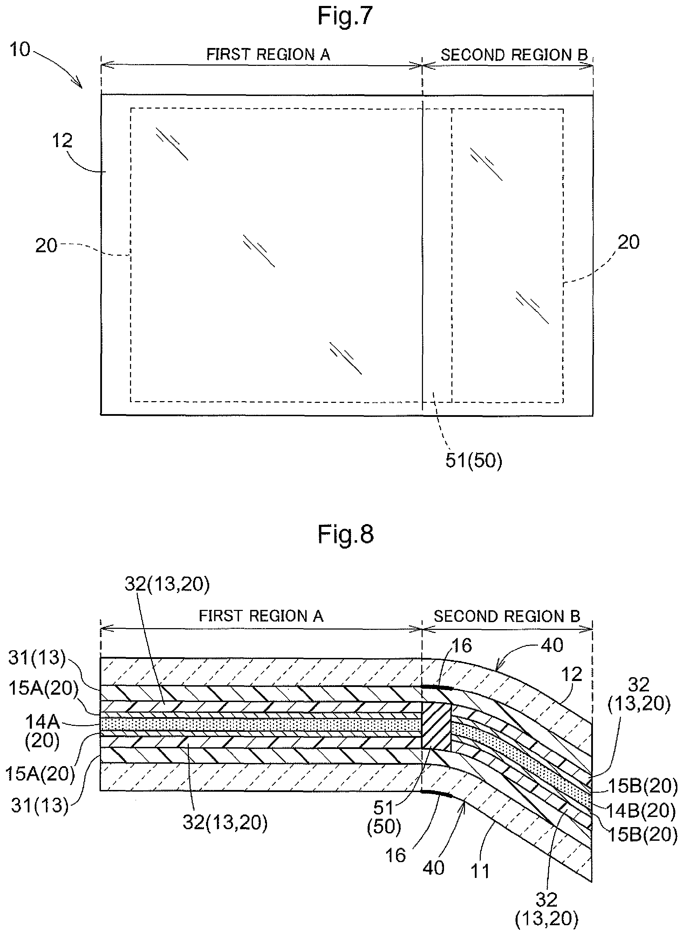

In the fifth embodiment, as shown in FIGS. 7 and 8, the short-circuit prevention portion 50 in the second region B of the laminated glass 10 has an insulating member 51 such as rubber or resin interposed between the light-adjusting portion 20 (light-adjusting layer 14A and pair of conductive layers 15A, 15A) between the pair of first regions A and the light-adjusting portion 20 (light-adjusting layer 14B and pair of conductive layers 15B, 15B) between the pair of second regions B, such that the boundary between the first region A and the second region B is electrically non-conductive in a plan view. The other configurations are the same as those in the first embodiment.

According to this embodiment, the insulating member 51 serving as the short-circuit prevention portion 50 mitigates the curved state of the light-adjusting layer 14 and the pair of conductive layers 15B, 15B arranged between the pair of second regions B, thereby preventing short-circuiting of the pair of conductive layers 15B, 15B in the pair of curved regions 40. In addition, since the light-adjusting portion 20 of the pair of first regions A and the light-adjusting portion 20 of the pair of second regions B are separated from each other, the light-adjusting layer 14A of the first region A and the light-adjusting layer 14B of the second region B can perform light adjustment independently. Accordingly, the laminated glass 10 can continue light adjustment by the light-adjusting layer 14A between the pair of first regions A, even if light adjustment by the light-adjusting layer 14B becomes impossible in the second regions B due to an effect such as short-circuiting between the pair of conductive layers 15B, 15B. As a result, the laminated glass 10 can suitably ensure the light-adjusting function in a specific region (first region A).

### [Other Embodiments]

(1) In the above embodiments, an example was shown in which the second region B of the laminated glass 10 is provided only on the front side in the vehicle front-rear direction. However, the second region B may also be provided on both the front and rear sides in the vehicle front-rear direction, or only on the rear side. Alternatively, the second region B may also be provided on both or only one of the left and right sides in the vehicle left-right direction.
(2) In the above embodiments, an example was shown in which the laminated glass 10 is used as a glass for the vehicle 1. However, the laminated glass 10 may also be used for a purpose other than a vehicle.
(3) In the above embodiments, a plurality of examples were shown in which the shielding film 16 is provided in the short-circuit prevention portion 50. However, the laminated glass 10 may also be configured without providing the shielding film 16 in the short-circuit prevention portion 50.

### Industrial Applicability

The present invention is widely applicable to a light-adjusting laminated glass.

### Description of Reference Signs

- 10: Light-adjusting laminated glass
- 11: First glass plate
- 12: Second glass plate
- 13: Intermediate layer
- 14, 14A, 14B: Light-adjusting layer
- 15, 15A, 15B: Conductive layer
- 16: Shielding film
- 20: Light-adjusting portion
- 31: First intermediate layer (adhesive layer)
- 32: Second intermediate layer (support layer)
- 40: Curved region
- 50: Short-circuit prevention portion
- 51: Insulating member
- A: First region
- B: Second region
- T1, T2: Film thickness

## Claims

1. A light-adjusting laminated glass comprising:
a light-adjusting layer whose light transmittance is adjustable by application of a voltage;
a pair of conductive layers arranged to sandwich the light-adjusting layer and configured to apply the voltage to the light-adjusting layer due to being supplied with power;
an intermediate layer having an insulating property and arranged to sandwich the conductive layers; and
a pair of glass plates arranged to sandwich the intermediate layer, each having a first region and a second region with different curvatures,
wherein the second region includes a curved region having a smaller radius of curvature than the first region, and
the pair of curved regions have a short-circuit prevention portion formed therebetween, the short-circuit prevention portion being configured to prevent short-circuiting caused by contact between the pair of conductive layers.

2. The light-adjusting laminated glass according to claim 1,
wherein the short-circuit prevention portion does not include the light-adjusting layer and the pair of conductive layers and is constituted by only the intermediate layer and the pair of glass plates.

3. The light-adjusting laminated glass according to claim 1,
wherein the short-circuit prevention portion does not include the pair of conductive layers and is constituted by only the light-adjusting layer, the intermediate layer, and the pair of glass plates.

4. The light-adjusting laminated glass according to claim 1,
wherein the short-circuit prevention portion separates the light-adjusting layer and the pair of conductive layers arranged between the pair of first regions from the light-adjusting layer and the pair of conductive layers arranged between the pair of second regions, such that a boundary between the first region and the second region is electrically non-conductive in a plan view.

5. The light-adjusting laminated glass according to claim 1,
wherein in the short-circuit prevention portion, the light-adjusting layer disposed between the pair of second regions has a film thickness that is larger than a film thickness of the light-adjusting layer disposed between the pair of first regions.

6. The light-adjusting laminated glass according to claim 1,
wherein the short-circuit prevention portion has an insulating member interposed between the light-adjusting layer and the pair of conductive layers arranged between the pair of first regions, and the light-adjusting layer and the pair of conductive layers arranged between the pair of second regions, such that a boundary between the first region and the second region is electrically non-conductive in a plan view.

7. The light-adjusting laminated glass according to any one of claims 1 to 6,
wherein the voltage of 30 V or more is applied to the light-adjusting layer when the light-adjusting layer is set to a haze value of 10% or less.

8. The light-adjusting laminated glass according to any one of claims 1 to 7,
wherein the light-adjusting layer has a film thickness of 5 µm or more and 150 µm or less.

9. The light-adjusting laminated glass according to any one of claims 1 to 8,
wherein in the second region, the glass plate has a three-dimensional curvature.

10. The light-adjusting laminated glass according to any one of claims 1 to 9,
wherein the intermediate layer includes a support layer that supports the conductive layer and an adhesive layer that has a smaller Young's modulus than the support layer.

11. The light-adjusting laminated glass according to any one of claims 1 to 10,
wherein the light-adjusting laminated glass is disposed on a roof of a vehicle.

12. The light-adjusting laminated glass according to claim 11,
wherein at least the short-circuit prevention portion is provided with a shielding film.

13. The light-adjusting laminated glass according to claim 12,
wherein the first region is a substantially flat surface having a radius of curvature of 3000 mm or more, and the second region is a curved surface having a radius of curvature of 2000 mm or less.
